# EUROPÄISCHE PATENTSCHRIFT

(11) **EP 0 899 147 B1**
(45) Veröffentlichungstag und Bekanntmachung des Hinweises auf die Patenterteilung: **15.10.2003**
(21) Anmeldenummer: 98115424.8
(22) Anmeldetag: 17.08.1998
(51) Int. Cl.: B60K 26/02

(54) **Fahrpedal mit Dämpfungseinrichtung**
Accelerator pedal with a damping device
Pédale d'accélérateur comportant un dispositif d'amortissement

(30) Priorität: 27.08.1997 DE 19737289
(43) Veröffentlichungstag der Anmeldung: 03.03.1999
(73) Patentinhaber: Siemens Aktiengesellschaft, 80333 München (DE)
(72) Erfinder: Kohlen, Peter, 35510 Butzbach (DE)

(56) Entgegenhaltungen:
- EP-A- 0 657 319
- EP-A- 0 738 622
- DE-A- 4 300 096
- DE-A- 19 517 172
- DE-U- 7 708 558
- US-A- 1 330 986
- US-A- 4 256 293

## Beschreibung

Die Erfindung bezieht sich auf eine Steuereinrichtung, insbesondere eine Leistungssteuereinrichtung für einen Fahrzeugmotor, mit den Merkmalen des Oberbegriffs des Patentanspruchs 1. Um der Bedienperson einer solchen Steuereinrichtung eine fühlbare Kraftrückmeldung entlang dem Weg des Betätigungshebels (oft auch als Gas- oder Fahrpedal bezeichnet) zu geben und übermäßige Schwingungen der Einrichtung zu vermeiden, sieht man neben einer Rückstellkraft -in der Regel durch eine Rückholfeder dargestellt- auch eine Dämpfung z. B. durch Reibelemente vor. Naturgemäß wirken derartige Dämpfungen in der Regel in beiden Bewegungsrichtungen gleich, also auch gegen die Rückstellkraft. Die Dämpfung kann infolge Alterung, Verschleißes oder dgl. zu stark werden mit dem Ergebnis, daß die Steuereinrichtung nur langsam oder im Extremfall gar nicht zurückgestellt wird.

Man sieht deshalb schon eine Dämpfungs- oder Bremshysterese zwischen beiden Bewegungsrichtungen vor. Eine Ausführungsform ist in DE 34 12 318 A1 beschrieben. Dort stehen translatorisch bewegliche Reibelemente unter der Einwirkung einer Rückstellfeder.

Sie werden beim Niederdrücken des Pedals verstärkt gegen ihre Gegenreibflächen gedrückt, je mehr die Feder gespannt wird, während bei Bewegungsumkehr die Anpreßkraft und damit die Reibwirkung mit zunehmender Federentspannung verringert werden. Mit dieser Anordnung könnten sich aber die Reibpaare bei zunehmendem Federdruck gegeneinander verkeilen.

In der die Merkmale des Oberbegriffs des Anspruchs 1 aufweisenden EP-A-0 657 319 wird eine Steuereinrichtung, insbesondere eine Leistungssteuereinrichtung für Antriebsmotoren von Fahrzeugen beschrieben, die einen beweglichen Betätigungshebel, insbesondere ein Pedal und einer Bewegung des Betätigungshebels entgegenwirkende Dämpfungseinrichtung aufweist. Dabei ist ein Freilauf vorgesehen, der die auf dem Betätigungshebel wirkende Dämpfungskraft in einer Bewegungsrichtung verringert. Die von der Dämpfung entkoppelte Bewegungsrichtung ist die Wirkrichtung einer den Betätigungshebel selbsttätig in eine Grundstellung bewegenden Rückstellkraft einer Feder.

In der US-A-1,330,986 wird zusätzlich ein Freilauf als Hülsenfreilauf und eine Reibfläche als Mantelfläche eines zylindrischen Reibkörpers beschrieben, der mit einem Betätigungshebel und dem Freilauf zu gemeinsamer Rotation auf einer Achse gelagert ist.

Bei einer anderen bekannten Reibungsdämpfung für ein Fahrpedal (DE 195 17 172 A1) ist die Pedal-Rückholfeder zwischen dem Pedal selbst und einem Wippen-Bremshebel angeordnet. Letzterer drückt einen Reibbelag auf eine rotatorisch bewegte Lagerhülse des Pedalhebels. Die Anpreßkraft des Reibbelags erhöht sich proportional mit zunehmendem Niedertreten des Pedals und sinkt entsprechend beim Loslassen wieder ab. Im Moment des Loslassens des Pedals (Umkehrpunkt) ist aber vorübergehend noch die maximale Reibungskraft wirksam.

In einer einschlägigen Einrichtung mit hydraulischer Wegübertragung (DE 25 50 326 A1) von einem pedalseitigen Geberzylinder auf einen steuerungsseitigen Nehmerzylinder ist am letzteren eine stärkere Rückstellfeder als am Geberzylinder vorgesehen, so daß der Nehmerzylinder beim Entlasten des Pedals nicht nacheilen kann. Eine Dämpfung dieser Einrichtung wird durch die unvermeidlichen Strömungswiderstände zwischen Geber- und Nehmerzylinder sichergestellt, hingegen ist keine Krafthysterese zwischen Be- und Entlastung des Pedals dargestellt.

Der Erfindung liegt die Aufgabe zugrunde, die Funktionssicherheit der Dämpfung einer solchen Steuereinrichtung weiter zu verbessern.

Diese Aufgabe wird erfindungsgemäß mit den kennzeichnenden Merkmalen des Anspruchs 1 gelöst. Die Merkmale der abhängigen Ansprüche geben vorteilhafte Weiterbildungen dieses Gegenstands an.

Wenn man einen in Entlastungs- oder Rückstellrichtung des Pedals wirksamen Freilauf zwischen dem mit dem Pedal gekoppelten Reibpartner und der Pedallagerung vorsieht, wirkt sich die Bewegungsdämpfung nur noch beim Niederdrücken des Pedals aus, während sie beim Loslassen durch den Freilauf zumindest signifikant verringert oder gänzlich wirkungslos wird. Damit wird bei hinreichender Dämpfung von Pedalschwingungen eine spontane Reaktion der gesteuerten Größe -z. B. Motorleistung- auf das Loslassen des Betätigungshebels sichergestellt.

Mit dieser Maßnahme verändert sich auch die gegenseitige Gewichtung der Rückstellund der Dämpfungskraft, denn man kann die Rückstellkraft in der Kombination mit einem Rückstell-Freilauf schwächer als in den bisherigen Anwendungen gestalten, bei denen sie neben der Masse des Betätigungshebels und ggf. Lagerstellenreibung auch die zusätzliche Dämpfungskraft zu überwinden hatte. Demgegenüber kann man die Dämpfung oder Hysterese verstärken, weil sie sich auf die Rückstellbewegung nicht mehr auswirkt.

In einer rotatorisch bewegten Reibungsanordnung wird der pedalseitige Reibungskörper ähnlich wie bei einer Ratsche nur in eine Richtung, nämlich beim Niedertreten des Pedals, gegen die Reibungskraft weitergedreht, während er beim Rückstellen des Pedals stehenbleibt. Ein vorteilhafter Nebeneffekt dessen ist, daß seine Reibfläche sich insgesamt weniger und gleichmäßig über seinen Umfang abnutzt.

Eine besonders vorteilhafte Bauweise eines mechanischen Freilaufs mit geringstem Platzbedarf ist ein an sich bekannter Hülsenfreilauf (z. B. Bauart INA HF 1012), der äußerlich wie ein Nadellager aufgebaut ist, dessen Lagernadeln jedoch in einer Drehrichtung als Klemmrollen wirken und sperren.

Abhängig von den Einbauverhältnissen können jedoch auch andere Freilauf-Bauformen verwendet werden. Es kommt jedenfalls darauf an, daß zwischen dem Betätigungshebel bzw. Pedal und der Dämpfungseinrichtung eine Freigängigkeit derart eingeführt wird, daß die Dämpfungskraft nicht oder zumindest von Anfang an stark vermindert gegen die Kraft der Rückholfeder wirkt.

Wirkt die Dämpfungseinrichtung fluidisch/hydraulisch (z. B. Durchströmung mindestens einer Drosselbohrung in einem zwischen zwei Arbeitkammern gleitenden Kolben), so kann man darin einen Freilauf bzw. zumindest eine verringerte Dämpfungskraft in einer Bewegungsrichtung durch einen Bypaß parallel zur Drosselbohrung realisieren, der in an sich bekannter Weise durch ein Rückschlagventil (Flatterventil) druckgesteuert selbsttätig beim Belasten des Betätigungshebels geschlossen und beim Entlasten geöffnet wird, um einen vergrößerten Überströmquerschnitt freizugeben.

Man kann den Freilauf auch realisieren, indem der Reibbelag bei Entlastung des Betätigungshebels nach einem minimalen Rückhub selbsttätig mechanisch von seiner Reibfläche abgehoben wird, um den Reibschluß aufzuheben. Eine solche Anordnung wäre auch bei einer Reibdämpfungsanordnung mit translatorischer Relativbewegung vorzusehen.

Weitere Einzelheiten und Vorteile des Gegenstands der Erfindung gehen aus der Zeichnung eines Ausführungsbeispiels und deren sich im folgenden anschließender eingehender Beschreibung hervor.

Es zeigen als Prinzipschaubilder zur Verdeutlichung der Anordnung und Wirkung des Freilaufs
- Fig. 1: eine dem Stand der Technik ähnelnde Ausführungsform mit einer Reibungsdämpfung und einem mechanischen Freilauf, die nicht zur Erfindung gehört,
- Fig. 2: eine erste Ausführungsform der Erfindung mit fluidischer Dämpfung und einem Rückstell-Bypaß,
- Fig. 3: eine zweite Ausführungsform der Erfindung mit einer Vorrichtung zum Aufheben einer Reibungsdämpfung bei Rückstellung des Betätigungshebels.

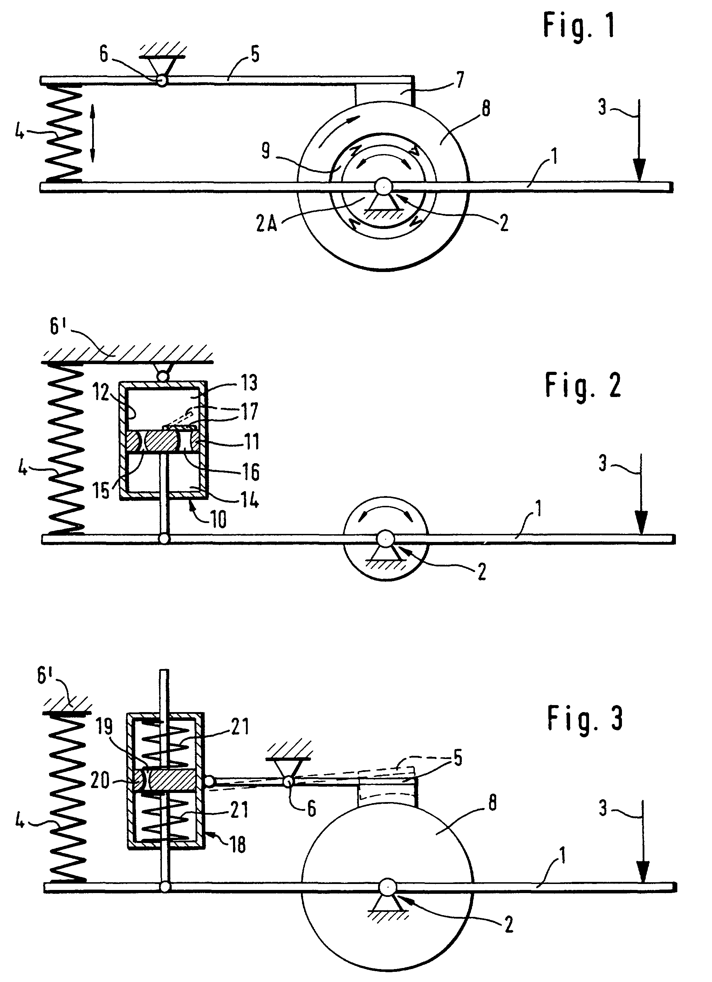

Gemäß **Fig. 1** ist ein Betätigungshebel 1 auf einer Lagerstelle 2 um eine Achse 2A hinund herschwenkbar gelagert. Der Betätigungshebel (z. B. ein Fahrpedal eines Kraftfahrzeugs) ist hier zweiarmig ausgeführt. Eine durch einen abwärts weisenden Pfeil am ersten (rechten) Arm des Hebels repräsentierte Betätigungskraft 3 schwenkt ihn im Uhrzeigersinn gegen die Kraft einer Rückstellfeder 4. Diese ist -in an sich bekannter Weisefliegend zwischen dem zweiten (linken) Arm des Betätigungshebels 1 und einem ersten (linken) Arm eines ebenfalls zweiarmigen Bremshebels 5 abgestützt. Der Bremshebel ist wiederum an einer Lagerstelle 6 schwenkbar gelagert. An seinem anderen (rechten) Arm ist ein Reibbelag 7 angeordnet. Dieser wird von der Kraft der Feder bzw. dem von dieser um die Lagerstelle 6 ausgeübten Moment auf die Mantelfläche eines zylindrischen Reibkörpers 8 gedrückt. Letzterer ist um dieselbe Lagerstelle 2 drehbar wie der Betätigungshebel 1. Die Elemente mit den Bezugszeichen 5 bis 8 sind summarisch als Dämpfungseinrichtung anzusehen.

Zwischen dem Reibkörper 8 und der Achse 2A des Betätigungshebels 1 ist ein Hülsenfreilauf 9 angeordnet. Dessen Funktion ist durch Pfeile angedeutet Die Achse 2A des Betätigungshebels 1 ist im Uhrzeigersinn durch die Betätigungskraft 3, gegen den Uhrzeigersinn durch die Rückstellfeder 4 in beide Richtungen schwenkbar, wie durch einen Doppelpfeil symbolisiert. Im Uhrzeigersinn nimmt der Hülsenfreilauf 9 den Reibkörper 8 mit, das ist also seine Sperrichtung. Kleine, über den Umfang des Freilaufs verteilte Pfeilspitzen und ein Pfeil auf dem Reibkörper stellen dies bildlich dar. Dabei gleitet der Reibbelag über die Mantelfläche des Reibkörpers 8.

Wirkt dagegen nur die Rückstellfeder, so wird der Betätigungshebel 1 gegen den Uhrzeigersinn in seine Grundstellung zurückgeführt, während der Reibkörper 8 gegenüber der Achse 2A freiläuft und durch die Reibung mit dem Reibbelag 7 in seiner momentanen Stellung festgehalten wird. Im Ergebnis wird der Reibkörper 8 mit jeder Betätigung des Betätigungshebels 1 durch eine Kraft 3 um einen dessen Schwenkwinkel entsprechenden Winkel weitergedreht, rotiert also schrittweise im Uhrzeigersinn um die Achse 2A.

Beim Niedertreten des als Pedal ausgeführten Betätigungshebels 1 bleibt also die bisher von derartigen Einrichtungen gewohnte reibungsgedämpfte Wahrnehmung bzw. Fußkraft erhalten. Beim Abheben bzw. Zurücknehmen des Fußes folgt hingegen das Pedal aufgrund des Freilaufs unverzögert nach. Bei Bedarf könnte man den Freilauf selbst geringfügig dämpfen, um ein Zurückprellen des Betätigungshebels bei plötzlicher Entlastung zu vermeiden.

Nur zur Vereinfachung sind nicht dargestellt die dem Betätigungshebel nachgeordneten Elemente zur Leistungssteuerung, wie z. B. ein Winkel- oder Wegaufnehmer zum Wandeln des jeweiligen Schwenkwinkels in ein entsprechendes elektrisches Signal und die zugehörige Auswerte- und Steuereinrichtung.

Im Ausführungsbeispiel gemäß **Fig. 2** sind gleiche Teile mit denselben Bezugsziffern wie in Fig. 1 bezeichnet. Anstelle der Reibungsdämpfung ist hier jedoch ein fluidischer Dämpfer 10 parallel zur Rückstellfeder 4 zwischen dem linken Arm des Betätigungshebels 1 und einem festen Auflager 6' abgestützt. Schematisch ist dessen -an sich bekannte-Funktion angedeutet: Ein Kolben 11 ist gleitend in einem Zylinder 12 geführt und unterteilt diesen in zwei Kammern 13 und 14. Der Kolben 11 hat eine Drosselbohrung 15, die bei jeder Bewegung des Kolbens 11 einen gedämpften Druck- und Volumenausgleich zwischen den Kammern ermöglicht. Parallel zur Drosselbohrung 15 ist eine Bypaßbohrung 16 vorgesehen. Bei Aufwärtsbewegung des Kolbens 11 wird diese durch den erhöhten Druck in der Kammer 13 von einem Rückschlag- oder Flatterventil 17 verschlossen, so daß der Volumenausgleich nur oder im wesentlichen über die Drosselbohrung 15 stattfindet. Dies ist mithin die (stark) gedämpfte Bewegungsrichtung des Betätigungshebels 1. Beim Rückstellen des Hebels durch die Feder 4 steigt alsbald der Druck in der unteren Kammer 14 und öffnet das Flatterventil, so daß über den Bypaß ein rascherer Druckausgleich stattfinden kann. Dies ist mithin die Freilaufrichtung, wenn auch eine geringfügige Dämpfung erhalten bleibt. Diese kann aber, wie schon erwähnt, durchaus genutzt werden, um ein plötzliches Zurückschnellen eines Fahrpedals zu verhindern. Sie wird im Verhältnis zur Rückstellfeder so auszulegen sein, daß das Pedal einem Zurücknehmen des Fußes unverzüglich folgt.

Als Strömungsmedium für den Dämpfer 10 kann ein Gas (z. B. Luft) oder auch eine geeignete Flüssigkeit verwendet werden. Im ersteren Fall sind an die Dichtheit des Dämpfers keine besonderen Anforderungen zu stellen, vielmehr kann die Kompression des Gases vorteilhaft zur Erhöhung der wirksamen Rückstellkraft beitragen.

Bei einer in **Fig. 3** gezeigten dritten Variante mit einem mechanischen Freilauf ist die Rückstellfeder 4 analog zu Fig. 2 zwischen dem Betätigungshebel 1 und einem festen Auflager 6' abgestützt. Zwischen dem Betätigungshebel 1 und dem Bremshebel 5 gemäß Fig. 1 wird ein fluidischer Dämpfer 18 (Prinzipdarstellung) mit beidseitiger Kolbenstange angeordnet, so daß die enthaltene Flüssigkeit über die Drosselbohrung 19 des Kolbens 20 mit vollständigem Volumenausgleich hin und her gepumpt werden kann. Der Reibkörper 8 ist ohne Freilauf drehfest mit dem Betätigungshebel 1 verbunden.

In dieser Anordnung ist der Bremshebel 5 nur von durch den Dämpfer 18 übertragenen Kräften um seine Lagerstelle 6 schwenkbar bzw. belastbar. Unter der Wirkung der Betätigungskraft 3 wird der Kolben 20 gegen die Dämpfungskraft nach oben gedrückt. Auf den Bremshebel 5 wirkt dann bezüglich der Lagerstelle 6 eine Schwenkkraft im Uhrzeigersinn. Diese drückt den Bremsbelag 7 auf den Reibkörper 8. Im Stillstand ist grundsätzlich keine Reibungskraft wirksam und wird auch nicht benötigt.

Beim Rückstellen des Betätigungshebels 1 durch die Feder 4 wird der Bremshebel durch die im Dämpfer 18 vorübergehend aufgrund der gedrosselten Rückströmung übertragene Zugkraft gegen den Uhrzeigersinn geschwenkt. Dadurch hebt der Reibbelag 7 vom Reibkörper 8 ab, wie gestrichelt angedeutet. Damit ist die schon eingangs erwähnte mechanische Aufhebung des Reibschlusses realisiert, so daß der Betätigungshebel frei läuft bzw. ungebremst rückstellbar ist. Der hierzu notwendige Hub des Reibbelags 7 ist sehr klein.

Den Dämpfer 18 wird man vorzugsweise so auslegen, daß sein Kolben selbsttätig in eine Mittelstellung vorgespannt ist -hier durch die Federn 21 angedeutet-, um durch die Pumparbeit verursachte Längendifferenzen durch gedämpfte Rückstellbewegungen auszugleichen, und beidseitige Längenanschläge vorsehen. Das bedeutet, daß auch im Ruhezustand eine geringfügige Anpreßkraft zwischen dem Reibbelag und dem Reibkörper vorliegen mag, daß diese aber im Moment der Bewegungsumkehr bzw. Hebelentlastung sicher aufgehoben wird.

Insgesamt sind die Dämpfer wie die Federn selbstverständlich so auszulegen, daß sie selbst den größtmöglichen Bewegungen des Betätigungshebels 1 sicher folgen können.

Aus den hier erörterten Prinzipdarstellungen dürfen keine einschränkenden Schlüsse auf die konstruktiven Ausgestaltungen und Ausführungen der Bauelemente der Steuereinrichtung gezogen werden.

So wird man z. B. in der Ausführung gemäß Fig. 2 eine platzsparende Kombination der Feder 4 und des Dämpfers 10 bevorzugen, wobei diese koaxial als Federbein ausgeführt sein können, oder die Feder in den Dämpfer, z. B. in die obere Arbeitskammer, eingebaut ist. Wird der Dämpfer 10 mit Flüssigkeitsfüllung betrieben, so ist für einen vollständigen Volumenausgleich oder für eine entsprechende Volumenpufferung der Differentialwirkung des Kolbens zu sorgen.

## Patentansprüche

1. Steuereinrichtung, insbesondere Leistungssteuereinrichtung für Antriebsmotoren von Fahrzeugen, mit einem beweglichen Betätigungshebel (1), insbesondere einem Pedal, und einer Bewegungen des Betätigungshebels (1) entgegenwirkenden Dämpfungseinrichtung (5-8, 10) bei der ein Freilauf (9, 16, 17) vorgesehen ist, der die auf den Betätigungshebel (1) wirkende Dämpfungskraft in einer Bewegungsrichtung zumindest verringert, bei der die von der Dämpfung entkoppelte Bewegungsrichtung die Wirkrichtung einer den Betätigungshebel (1) selbsttätig in eine Grundstellung bewegenden Rückstellkraft ist, bei der die Dämpfungseinrichtung mindestens eine dem Betätigungshebel (1) zugeordnete und synchron mit diesem bewegbare Reibfläche (8) umfasst und dass der Freilauf (9) zwischen dem Betätigungshebel (1) und dieser Reibfläche (8) angeordnet ist, bei der die Reibfläche (8) als Mantelfläche eines zylindrischen Reibkörpers (8) ausgebildet ist, der mit dem Betätigungshebel (1) und dem Freilauf (9) zu gemeinsamer Rotation auf einer Achse (2A) gelagert ist, **dadurch gekennzeichnet, dass** zwischen dem Betätigungshebel (1) und einer festen Auflagerung (6') eine fluidische Dämpfungseinrichtung (10) mit richtungsabhängig unterschiedlicher Dämpfung vorgesehen ist, wobei insbesondere beim Rückstellen des Betätigungshebels (1) die geringere Dämpfung wirksam ist.

2. Steuereinrichtung nach Anspruch 1, **dadurch gekennzeichnet, dass** in der fluidischen Dämpfungseinrichtung (10) ein in einer Bewegungsrichtung selbsttätig öffnendes, einen vergrößerten Überströmquerschnitt (Bypassöffnung 16) freigebendes Rückschlagventil (17) vorgesehen ist.

3. Steuereinrichtung nach Anspruch 1 oder 2, **dadurch gekennzeichnet, dass** die Dämpfungseinrichtung (10) eine Baueinheit mit einer Rückstellfeder (4) bildet.

4. Steuereinrichtung nach Anspruch 1 oder 2, **dadurch gekennzeichnet, dass** die Dämpfungseinrichtung mindestens eine dem Betätigungshebel (1) zugeordnete und synchron mit diesem bewegbare Reibfläche (8) umfasst und **dass** der Freilauf durch Mittel (Dämpfer 18, Fig. 3) zum selbsttätigen mechanischen Abheben eines Reibbelags (7) von der Reibfläche (8) während einer Rückstellbewegung des Betätigungshebels (1) gebildet ist.

## Claims

1. Control arrangement, in particular power-control arrangement for engines of vehicles, having a movable actuating lever (1), in particular a pedal, and a damping device (5-8, 10) which counteracts movements of the actuating lever (1), in the case of which a freewheel (9, 16, 17) is provided, and this at least reduces in one direction of movement the damping force which acts on the actuating lever, in the case of which the movement direction isolated from the damping is the direction of action of a restoring force which moves the actuating lever (1) automatically into a basic position, in the case of which the damping device comprises at least one frictional surface (8), which is assigned to the actuating lever (1) and can be moved synchronously with the same, and in that the freewheel (9) is arranged between the actuating lever (1) and said frictional surface (8), in the case of which the frictional surface (8) is designed as a lateral surface of a cylindrical frictional body (8) which is mounted for joint rotation with the actuating lever (1) and the freewheel (9) on a spindle (2A), **characterized in that** a fluidic damping device (10) with damping which differs depending on direction is provided between the actuating lever (1) and a fixed support (6'), the lower damping taking effect, in particular, when the actuating lever (1) is restored.

2. Control arrangement according to Claim 1, **characterized in that** a nonreturn valve (17) which opens automatically in one direction of movement and releases an enlarged overflow cross section (bypass opening 16) is provided in the fluidic damping device (10).

3. Control arrangement according to Claim 1 or 2, **characterized in that** the damping device (10) forms a structural unit with a restoring spring (4).

4. Control arrangement according to Claim 1 or 2, **characterized in that** the damping device comprises at least one frictional surface (8), which is assigned to the actuating lever (1) and can be moved synchronously with the same, and **in that** the freewheel is formed by means (damper 18, Fig. 3) for the purpose of mechanically raising a friction lining (7) automatically from the frictional surface (8) during a restoring movement of the actuating lever (1).

## Revendications

1. Dispositif de commande, en particulier dispositif de commande de puissance pour moteurs de véhicules automobiles, comportant un levier mobile d'actionnement (1), en particulier une pédale, et comportant un dispositif d'amortissement (5-8, 10), s'opposant à des mouvements du levier d'actionnement (1), dispositif d'amortissement dans lequel est prévue une roue libre (9, 16, 17) qui au moins diminue la force d'amortissement agissant sur le levier d'actionnement (1) dans une direction de mouvement, dans lequel la direction de mouvement découplée de l'amortissement est la direction d'action d'une force de rappel déplaçant automatiquement le levier d'actionnement (1) dans une position de base, dans lequel le dispositif d'amortissement comprend au moins une surface de frottement associée au levier d'actionnement (1) et pouvant se déplacer de manière synchrone avec celui-ci, la roue libre (9) étant disposée entre le levier d'actionnement (1) et cette surface de frottement (8), dans lequel la surface de frottement (8) est réalisée sous la forme d'une surface périphérique d'un corps de frottement cylindrique (8), monté sur un axe (2A) avec le levier d'actionnement (1) et la roue libre (9) pour permettre une rotation d'ensemble,
**caractérisé en ce que**,
entre le levier d'actionnement (1) et un appui fixe (6'), il est prévu un dispositif d'amortissement par fluide (10), comportant un amortissement différent en fonction de la direction, l'amortissement le plus faible agissant en particulier lors du rappel du levier d'actionnement (1).

2. Dispositif de commande suivant la revendication 1, **caractérisé en ce que**, dans le dispositif d'amortissement (10), il est prévu un clapet anti-retour (17) ouvrant automatiquement dans une direction du mouvement et libérant une section de décharge agrandie (ouverture de dérivation 16).

3. Dispositif de commande suivant la revendication 1 ou 2, **caractérisé en ce que** le dispositif d'amortissement (10) constitue une unité de construction comportant un ressort de rappel (4).

4. Dispositif de commande suivant la revendication 1 ou 2, **caractérisé en ce que** le dispositif d'amortissement comporte au moins une surface de frottement (8) associée au levier d'actionnement (1) et pouvant se déplacer de manière synchrone avec lui, et **en ce que** la roue libre est formée par des moyens (amortisseur 18, figure 3) pour soulever automatiquement mécaniquement une garniture de frottement (7) de la surface de frottement (8) pendant un mouvement de rappel du levier d'actionnement (1).
